# EUROPÄISCHE PATENTANMELDUNG

(11) **EP 0 817 355 A2**
(43) Veröffentlichungstag der Anmeldung: **07.01.1998**
(21) Anmeldenummer: 97110568.9
(22) Anmeldetag: 27.06.1997
(51) Int. Cl.: H02K 1/27

(54) **Selbsttragendes, mit Permanentmagneten bestücktes Läuferblechpaket**

(30) Priorität: 03.07.1996 DE 19626773
(71) Anmelder: SIEMENS AKTIENGESELLSCHAFT, 80333 München (DE)
(72) Erfinder: Sopp, Helmut, 97650 Fladungen (DE); Vollmer, Rolf, Dipl. Ing., 36129 Gersfeld (DE)

(57) **Zusammenfassung**

Die Erfindung betrifft ein selbsttragendes, mit Permanentmagneten bestücktes Läuferblechpaket (1). Die Herstellung eines solchen Läuferblechpaketes wird dadurch wesentlich vereinfacht, daß die einzelnen Blechlamellen (2) des Läuferblechpaketes (1) in Umfangsrichtung einteilig ausgebildet und mit Aufnahmeöffnungen (4) für die Permanentmagnete (5) sowie mit einer zentralen Wellenöffnung (3) versehen sind und daß ferner die Blechlamellen (2) mittels eines zwischen den Blechlamellen (2) befindlichen Bindemittels zu dem Läuferblechpaket (1) verbunden sind.

## Beschreibung

Die Erfindung betrifft ein selbsttragendes, mit Permanentmagneten bestücktes Läuferblechpaket.

Ein solches Lauferblechpaket ist durch die DE-A-43 41 514 bekannt. Bei diesem bekannten Blechpaket bestehen die einzelnen Blechlamellen aus mehreren, umfangsmäßig getrennten Blechsegmenten, wobei sich diese Blechsegmente jeweils über eine Polbreite erstrecken. Durch zwischen den Blechsegmenten eingefügte und mit diesen verschweißte Stahlprofile sind die Blechsegmente sowohl zu umfangsmäßig geschlossenen Blechlamellen als auch axial zu einem Blechpaket verbunden. Der axiale Zusammenhalt des Blechpaketes erfolgt zudem noch durch in Nuten der Blechlamellen eingegossene und stirnseitig durch Kurzschlußringe verbundene Kurzschlußstäbe. Am Innenumfang einer von den Blechlamellen gebildeten Öffnung sind Permanentmagnete angefügt, die von einer mit einer der Innenkontur der Öffnung entsprechenden Außenkontur versehenen Hülse gehalten werden. Mit der Öffnung der Hülse kann das Läuferblechpaket auf ein Wellenteil aufgesteckt werden. Die Herstellung eines solchen Läuferblechpaketes erfordert eine Vielzahl von Montageschritten und Arbeitsvorgängen.

Der Erfindung liegt die Aufgabe zugrunde, ein Läuferblechpaket der gattungsgemäßen Art so weiterzubilden, daß dessen Herstellung wesentlich vereinfacht ist.

Die Lösung der gestellten Aufgabe gelingt nach der Erfindung dadurch, daß die einzelnen Blechlamellen des Läuferblechpaketes in Umfangsrichtung einteilig ausgebildet und mit Aufnahmeöffnungen für die Permanentmagnete sowie mit einer zentralen Wellenöffnung versehen sind und daß ferner die Blechlamellen mittels eines zwischen den Lamellen befindlichen Bindemittels zu dem Blechpaket verbunden sind. Durch die einteilige Ausbildung der Blechlamellen entfällt der gesonderte Arbeitsgang für das Verbinden derselben. Da die Permanentmagnete in entsprechende Aufnahmeöffnungen der Blechlamellen eingesetzt sind, bedarf es keines weiteren, gesonderten Halteelementes für diese. Die Verbindung der Blechlamellen in axialer Richtung erfolgt durch das zwischen den Blechlamellen befindliche Bindemittel. Dies kann schon auf die Blechlamellen vor deren Zusammenfügen zu einem Blechpaket aufgebracht sein.

Besonders vorteilhaft ist es, zum Verbinden der Blechlamellen zu einem Blechpaket Backlack zu verwenden. Der Backlack kann bereits auf die zum Ausstanzen der Blechlamellen dienenden Blechstreifen aufgebracht sein.

Die Antriebsverbindung zwischen dem Läuferblechpaket und dem in die Wellenöffnung einzuführenden Wellenteil wird dadurch ermöglicht, daß in der Wellenöffnung Elemente zum formschlüssigen Verbinden des Läuferblechpaketes mit dem Wellenteil vorgesehen sind.

Eine solche formschlüssige Verbindung läßt sich in einfacher Weise dadurch verwirklichen, daß am Innenumfang der Wellenöffnung in den Blechlamellen eine nutförmige Ausnehmung vorgesehen ist.

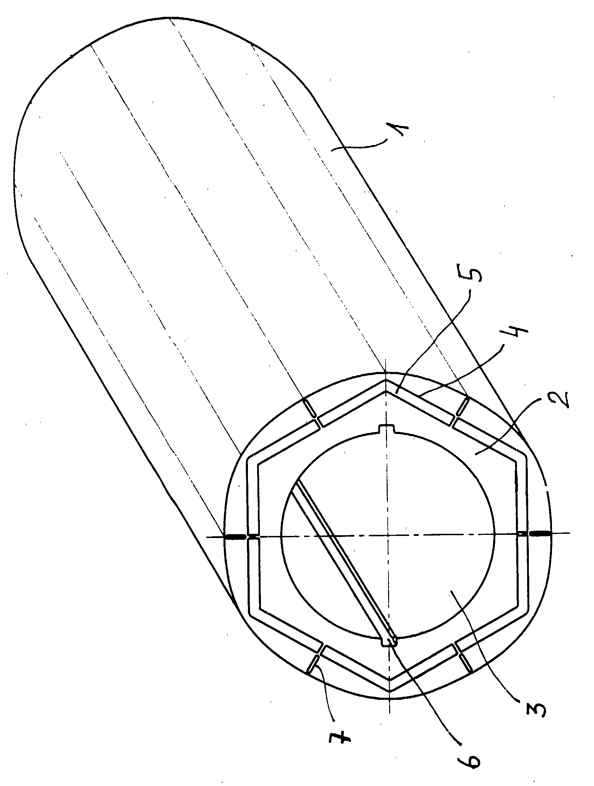

Anhand eines in der Zeichnung dargestellten Ausführungsbeispieles eines Läuferblechpaketes wird die Erfindung nachfolgend näher beschrieben.

Mit 1 ist ein selbsttragendes Läuferblechpaket bezeichnet, welches aus einer Vielzahl von axial hintereinander geschichteten Blechlamellen 2 besteht. Die Blechlamellen 2 weisen umfangsmäßig eine geschlossene, entweder runde oder nicht exakt kreisrunde Kontur auf. In die Blechlamellen 2 sind außer einer zentralen Wellenöffnung 3 weitere rechteckförmige Aufnahmeöffnungen 4 für Permanentmagnete 5 eingestanzt.

Am Innenumfang der Wellenöffnung 3 sind ferner nutförmige Ausnehmungen 6 vorgesehen. Mittels dieser Ausnehmungen 6 ist eine Paßfederverbindung mit einem in die Wellenöffnung 3 einzuführenden Wellenteil möglich.

Um den Streufluß zwischen den einzelnen Polen des Läufers zu begrenzen, sind zwischen den Polen, d. h. in den Pollücken, Streuschlitze 7 in den Blechlamellen 2 vorgesehen.

Die axiale Verbindung der Blechlamellen 2 zu dem selbsttragenden Läuferblechpaket 1 erfolgt mittels eines zwischen den Blechlamellen 2 befindlichen Bindemittels, vorteilhafterweise mittels Backlack. Der Backlack kann bereits auf die Blechstreifen aufgetragen sein, aus denen die Blechlamellen 2 ausgestanzt werden. Nach dem Schichten der Blechlamellen 2 zu dem Läuferblechpaket 1 wird dieses entsprechend erwärmt, so daß die einzelnen Blechlamellen durch den schmelzenden und beim anschließenden Abkühlen des Blechpaketes 1 wieder verfestigenden Backlack fest miteinander verbunden werden.

Damit entfallen auch gesonderte, sich längs durch das Blechpaket 1 erstreckende Verbindungsteile, die nicht nur einen gesonderten Montageaufwand erfordern, sondern ggf. auch den magnetischen Fluß im Läuferblechpaket 1 negativ beeinflussen können.

Die durch den Backlack gewährleistete feste Verbindung der Blechlamellen 2 untereinander erlaubt auch eine für die Erzielung eines einwandfreien Sitzes des Läuferblechpaketes 1 auf dem Wellenteil ggf. notwendige spanende oder schleifende Bearbeitung der Innenkontur der Wellenöffnung 3.

## Patentansprüche

1. Selbsttragendes, mit Permanentmagneten bestücktes Läuferblechpaket, **dadurch gekennzeichnet,** daß die einzelnen Blechlamellen (2) des Läuferblechpaketes (1) in Umfangsrichtung einteilig ausgebildet und mit Aufnahmeöffnungen (4) für die Permanentmagnete (5) sowie mit einer zentralen Wellenöffnung (3) versehen sind und daß ferner die Blechlamellen (2) mittels eines zwischen den Blechlamellen (2) befindlichen Bindemittels zu dem Läuferblechpaket (1) verbunden sind.

2. Läuferblechpaket nach Anspruch 1, **dadurch gekennzeichnet,** daß die Blechlamellen (2) mittels Backlack miteinander verbunden sind.

3. Läuferblechpaket nach Anspruch 1 oder 2, **dadurch gekennzeichnet,** daß in der Wellenöffnung (3) Elemente (6) zum formschlüssigen Verbinden des Läuferblechpaketes (1) mit einem Wellenteil vorgesehen sind.

4. Läuferblechpaket nach Anspruch 3, **dadurch gekennzeichnet,** daß am Innenumfang der Wellenöffnung (3) in den Blechlamellen (2) mindestens eine nutförmige Ausnehmung (6) vorgesehen ist.
